# EUROPEAN PATENT SPECIFICATION

(11) **EP 2 071 938 B1**
(45) Date of publication and mention of the grant of the patent: **01.09.2010**
(21) Application number: 08105994.1
(22) Date of filing: 16.12.2008
(51) Int. Cl.: A01G 9/14, A01D 45/00, B65G 65/23, B65G 67/24

(54) **Container for cucumbers, as well as system provided with the container**
Behälter für Gurken, und Vorrichtung mit dem Behälter
Bac à concombres, ainsi que système équipé de ce bac

(30) Priority: 17.12.2007 NL 2001095
(43) Date of publication of application: 24.06.2009
(73) Proprietor: Koat B.V., 5711 CP Someren (NL)
(72) Inventor: de Corte, Marinus Petrus Jozef, 5721 JA, Asten (NL)
(74) Representative: Verhees, Godefridus Josephus Maria

(56) References cited:
- DE-C1- 4 319 826
- NL-A- 9 401 186

## Description

### Field of the invention.

The invention relates to a container for cucumbers comprising an outer box open at the top provided with at least one compartment, which compartment is bounded by a bottom, a front wall, a rear wall and two side walls.

### State of the art.

A container of this type is known from DE-A-43 19 826. The container known from this document has three compartments. If this container is used for harvesting cucumbers during which the container is pushed along between rows of cucumber plants and the harvested cucumbers are laid in the compartments, the rear compartment can be filled in a simple manner. However, one is to reach over the rear compartment to fill the front compartment.

The document NL 9401186 discloses a container as in the preamble of claim 1

### Summary of the invention.

It is an object of the invention to provide a container of the type defined in the opening paragraph which can be filled in a simpler fashion than the known container. For this purpose the container according to the invention is characterised in that the container further comprises an inner box open at the top and comprising a bottom, a front wall, a rear wall and two side walls, which inner box is located inside the compartment of the outer box and can be displaced between a first position in which the inner box with its front wall borders on or adjoins the front wall of the compartment and a back position in which the inner box with its back wall borders on or adjoins the rear wall of the compartment. The inner box can then be displaced first to the front position and be filled in this position. If the inner box is full, it can be displaced to the back position and the front part of the outer box can be filled. In this way it will never be necessary to reach over one compartment to put the products in another compartment.

In order to avoid the inner box moving in the outer box at undesired times, the container preferably comprises blocking means which can block the inner box in one of the positions.

The inner box is preferably provided with wheels and is movable relative to the outer box. The wheels are preferably located at the top of the side walls of the inner box, while at the top of the side walls of the outer box rails are present along which the wheels can move.

Furthermore, the inner box comprises further wheels preferably at the bottom of the side walls and the outer box comprises further rails at the bottom of the side walls along which rails it is possible for the further wheels to move.

An embodiment of the container according to the invention is characterised in that in the bottom of the inner box is provided at least one gate and in the bottom of the outer box are provided at least two gates, while in the front position of the inner box one of the gates of the outer box is located under the gate of the inner box and in the back position of the inner box the other gate of the outer box is located under the gate of the inner box.

A further embodiment of the container according to the invention is characterised in that the outer box comprises a further compartment and the container comprises a further inner box, while an inner box is present in each compartment and while the rear walls of the compartments are adjoining. As a result, the container can be used in two directions and need not be turned round for being used in two directions.

Preferably each gate is can be turned around a spindle which runs parallel with the front and back sides while all gates can be opened downwards in the same direction. This is advantageous when emptying the containers over a conveyor belt and the contents of the containers then end up on the conveyor belt in the direction of transport of the conveyor belt.

The invention also relates to a system for harvesting and transporting cucumbers, comprising a transport arrangement provided with a support and a conveyor belt which is at least partly located under the support. With respect to the system the invention is characterised in that the system further comprises at least one container according to the invention which can be displaced to a emptying position on the support, while the transport arrangement further includes displacement means for changing the height of at least the part of the conveyor belt that is located under the support, as well as gate moving means for individually opening each of the gates of the container, and control means controlling both the displacement means and the gate moving means in such a way that when a gate is opened at least the part of the conveyor belt located under the container is brought to an elevated position so that the end of the gate is located slightly above the conveyor belt. As a result, the contents of the boxes do not drop onto the conveyor belt, but are led to the conveyor belt through these gates.

### Brief description of the drawings.

The following description relating to the appended drawings, the whole given by way of non-limiting example of the container and the system according to the invention, will provide better understanding of how the invention can be realised, in which:
Fig. 1 shows a perspective view of an embodiment of the container according to the invention;
Fig. 2 shows a longitudinal section of the container shown in Fig. 1;
Fig. 3 shows a plan view of the container shown in Fig. 1;
Fig. 4 gives a side view of a diagrammatic embodiment of the system according to the invention.

### Detailed description of the drawings

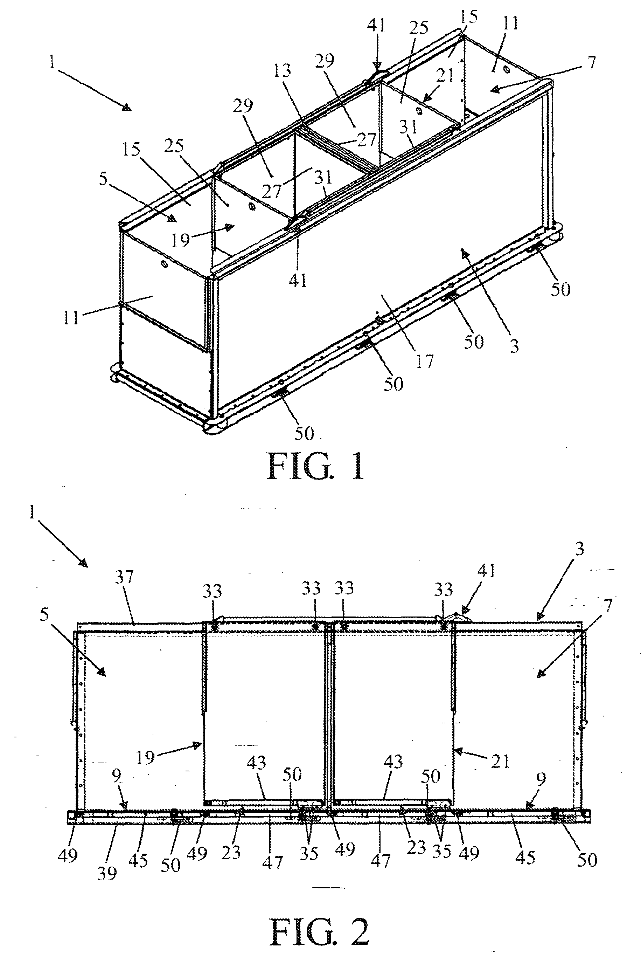

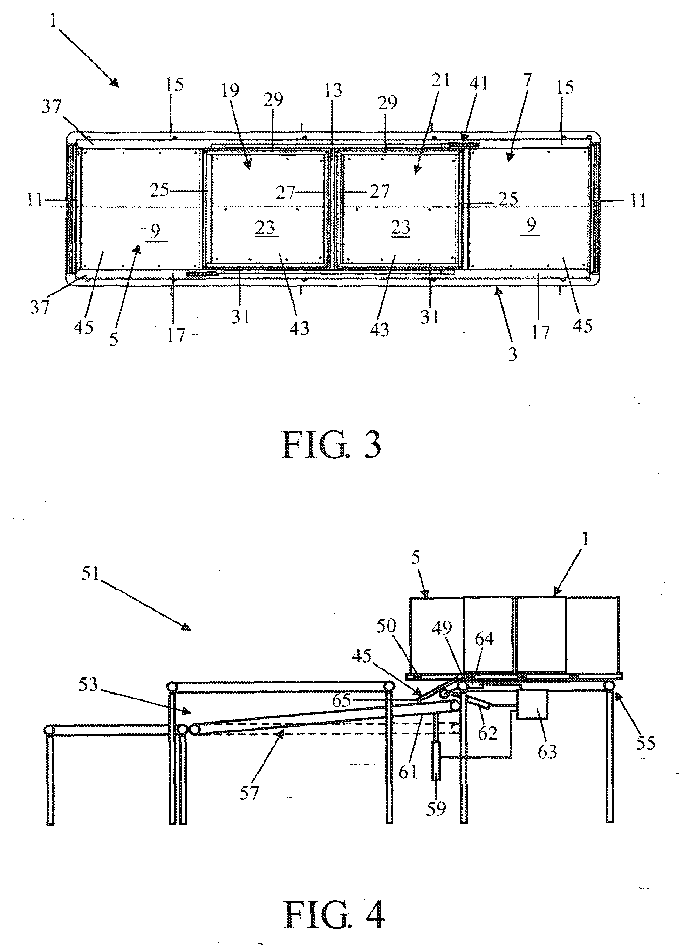

Figs. 1, 2 and 3 show an embodiment of the container according to the invention in perspective view, longitudinal section and plan view respectively. The container 1 has an outer box 3 open at the top and divided in two compartments 5 and 7. Each compartment is bounded by a bottom 9 (see Figs. 2 and 3), a front wall 11, a rear wall 13 and two side walls 15 and 17. The back walls of the compartments 5 and 7 are facing each other. Each compartment contains an inner box 19, 21 open at the top and having a bottom 23 (see Figs. 2 and 3), a front wall 25, a rear wall 27 and two side walls 29 and 31. The inner boxes 19 and 21 can be displaced between a front position, in which the front wall 25 of the inner box adjoins the front wall 11 of the compartment and a back position (shown in Fig. 1), in which the rear wall 27 of the inner box adjoins the rear wall 13 of the compartment.

The inner boxes 19 and 21 have wheels 33 and 35, see Figs. 2 and 3, at the top and bottom of the side walls 29 and 31. The wheels can move along rails 37 and 39 present at the top and bottom of the side walls 15 and 17 of the compartments. The container 1 has blocking means 41 which can individually block each inner box 19, 21 in one of the positions.

In the bottom 23 of each inner box 19, 21 there is a gate 43 and in the bottom 9 of each compartment 5, 7 of the outer box 3 there are two gates 45 and 47. In the front position of the inner box the front gate 45 of the outer box is located under the gate 43 of the inner box and in the back position of the inner box the rear gate 47 of the outer box is located under the gate 43 of the inner box. Each gate-43-47 can be turned around a spindle 49, it being possible for all gates to be opened downwards in the same direction. The gates 45 and 47 are locked by a catch 50 which can be operated from the outside.

Fig. 4 shows diagrammatically an embodiment of the system according to the invention for harvesting and transporting cucumbers. The system 51 comprises a transport arrangement 53 which includes a support 55 on which a container can be placed, as well as a conveyor belt 57 partly located under the support for discharging the contents of the container. The system 51 further includes a plurality of containers 1 which can be displaced to a position on the support 55 in which they can be emptied.

The transport arrangement 53 comprises displacement means 59 for changing the height of the part 61 of the conveyor belt 57 that is located under the support 55. Furthermore, the transport arrangement includes gate moving means 62 for lowering the gate 43 of the part of the compartment that is in the emptying position, and release means 64 for operating the catches 50 by which the gates of the container can be released individually. The conveyor belt arrangement further includes control means 63. They first and foremost drive the release means 64 to release the front catch 50 and thereafter drive the conveyor belt which carries the container 1. The container 1 is then moved ahead from an initial position over one quarter of its length as far as the position shown in Fig. 4, the front part of the first compartment 5 being in the emptying position.

Subsequently, the control means 63 drive the displacement means 59 in order to lift the part 61 of the conveyor belt 57 until the position shown has been reached. Subsequently, the control means 63 drive the gate moving means 62 which slowly lower the gate 43 and set the conveyor belt 57 in motion. The free end 65 of the gate 43 is then located slightly above the conveyor belt 57.

Once the front part of the compartment 5 has been emptied, the part 61 of the conveyor belt 57 is lowered as far as the position indicated by the dashed lines and the gate 43 is pushed shut by the gate moving means 62. After this the cycle repeats itself for the other parts of the compartments of the container.

## Claims

1. A container (1) for cucumbers comprising an outer box (3) open at the top and provided with at least one compartment (5), which compartment is bounded by a bottom (9) a front wall (11), a rear wall (13) and two side walls (15,17), **characterised in that** the container further comprises an inner box open (19, 21) at the top and comprising a bottom (23), a front wall (25), a rear wall (27) and two side walls (29, 31), which inner box is located inside the compartment of the outer box and can be displaced between a first position in which the inner box with its front wall borders on or adjoins the front wall of the compartment and a back position in which the inner box with its back wall borders on or adjoins the rear wall of the compartment.

2. A container as claimed in claim 1, **characterised in that** the container comprises blocking (41) means which can block the inner box in one of the positions.

3. A container as claimed in claim 1 or 2, **characterised in that** the inner box is provided with wheels (33) and is movable relative to the outer box.

4. A container as claimed in claim 1, 2 or 3, **characterised in that** the wheels are located at the top of the side walls of the inner box, while at the top of the side walls of the outer box rails (37) are present along which the wheels can move.

5. A container as claimed in claim 3 or 4, **characterised in that** the inner box comprises further wheels (35) at the bottom of the side walls and the outer box comprises further rails (39) at the bottom of the side walls along which-rails the further wheels can move.

6. A container as claimed in any one of the preceding claims, **characterised in that** in the bottom of the inner box is provided at least one gate (43) and in the bottom of the outer box are provided at least two gates (45, 47), while in the front position of the inner box one of the gates of the outer box is located under the gate of the inner box and in the back position of the inner box the other gate of the outer box is located under the gate of the inner box.

7. A container as claimed in any one of the preceding claims, **characterised in that** the outer box comprises a further compartment (7) and the container comprises a further inner box, while an inner box is present in each compartment and while the rear walls of the compartments are adjoining.

8. A container as claimed in claim 6 or claims 6 and 7, **characterised in that** each gate can be turned around a spindle (49) which runs parallel with the front and back sides while all gates can be opened downwards in the same direction.

9. A system for harvesting and transporting cucumbers, comprising a transport arrangement (53) provided with a support (55) and a conveyor belt (57) which is at least partly located under the support, **characterised in that** the system further comprises at least one container as claimed in claim 8 which can be displaced to a emptying position on the support, while the transport arrangement further includes displacement means (59) for changing the height of at least the part (61) of the conveyor belt that is located under the support, as well as gate moving means (62) for individually opening each of the gates of the container, and control means (63) controlling both the displacement means and the gate moving means in such a way that when a gate is opened at least the part of the conveyor belt located under the container is brought to an elevated position so that the end of the gate is located slightly above the conveyor belt.

## Patentansprüche

1. Behälter (1) für Salatgurken, bestehend aus einem an der Oberseite offenen Außenkasten (3), der über mindestens ein Fach (5) verfügt, welches von einem Boden (9), einer Stirnwand (11), einer Rückwand (13) und zwei Seitenwänden (15, 17) begrenzt wird, **dadurch gekennzeichnet, dass** der Behälter ferner einen an der Oberseite offenen Innenkasten (19, 21) umfasst, der mit einem Boden (23), einer Stirnwand (25), einer Rückwand (27) und zwei Seitenwänden (29,31) versehen ist, wobei sich dieser Innenkasten in dem Fach des Außenkastens befindet und verschiebbar zwischen einer vorderen Position angeordnet is, in der der Innenkasten mit der Stirnwand an die Stirnwand des Fachs grenzt oder sich in deren Nähe befindet, sowie einer hinteren Position, in der der Innenkasten mit der Rückwand an die Rückwand des Fachs grenzt oder sich in deren Nähe befindet.

2. Behälter nach Anspruch 1, **dadurch gekennzeichnet, dass** der Behälter Blockiervorrichtungen (41) umfasst, mit denen der Innenkasten in einer der Positionen verriegelt werden kann.

3. Behälter nach einem der Ansprüche 1 oder 2, **dadurch gekennzeichnet, dass** der Innenkasten mit Rädern (33) versehen und zu dem Außenkasten verfahrbar ist.

4. Behälter nach einem der Ansprüche 1, 2 oder 3, **dadurch gekennzeichnet, dass** sich die Räder an der Oberseite der Seitenwände des Innenkastens befinden, wobei an der Oberseite der Seitenwände des Außenkastens Schienen (37) vorhanden sind, auf denen die Räder laufen können.

5. Behälter nach einem der Ansprüche 3 oder 4, **dadurch gekennzeichnet, dass** der Innenkasten an der Unterseite der Seitenwände mit weiteren Rädern (35) und der Außenkasten an der Unterseite der Seitenwände mit weiteren Schienen (39) versehen ist, auf denen die weiteren Räder laufen können.

6. Behälter nach einem der vorangegangenen Ansprüche, **dadurch gekennzeichnet, dass** in dem Boden des Innenkastens mindestens eine Klappe (43) und in dem Boden des Außenkastens mindestens zwei Klappen (45, 47) vorhanden sind, wobei sich in der vorderen Position des Innenkastens eine der Klappen des Außenkastens unter der Klappe des Innenkastens befindet und sich in der hinteren Position des Innenkastens die andere Klappe des Außenkastens unter der Klappe des Innenkastens befindet.

7. Behälter nach einem der vorangegangenen Ansprüche, **dadurch gekennzeichnet, dass** der Außenkasten mit einem weiteren Fach (7) versehen ist und der Behälter einen weiteren Innenkasten umfasst, wobei in jedem Fach ein Innenkasten vorhanden ist und wobei die Fächer mit den Rückwänden aneinander grenzen.

8. Behälter nach Anspruch 6 oder den Ansprüchen 6 und 7, **dadurch gekennzeichnet, dass** sich jede Klappe um eine Achse (49) drehen lässt, die parallel zu den Stirn- oder Rückwänden verläuft, wobei alle Klappen in der gleichen Richtung nach unten hin aufschwenken können.

9. System für das Einsammeln und Transportieren von Salatgurken, bestehend aus einer Fördervorrichtung (53), die mit einer Abstützung (55) und einem Förderband (57) versehen ist, welches sich zumindest teilweise unter der Abstützung befindet, **dadurch gekennzeichnet, dass** das System ferner mindestens einen Behälter nach Anspruch 8 umfasst, der sich auf der Abstützung in eine Entleerungsposition bewegen lässt, wobei die Fördervorrichtung ferner Positionierungsmittel (59) für die Höhenverstellung zumindest jenes Teils (61) des Förderbandes umfasst, der sich unter der Abstützung befindet, sowie Klappenpositionierungsmittel (62), um die Klappen des Behälters einzeln aufschwenken zu können, sowie Steuerungsmittel (63), mit denen die Positionierungsmittel und Klappenpositionierungsmittel so angesteuert werden, dass sich beim Öffnen einer Klappe zumindest der unter dem Behälter befindliche Teil des Förderbandes in einer hochgefahrenen Stellung befindet, so dass sich der äußere Klappenrand in geringem Abstand über dem Förderband befindet.

## Revendications

1. Conteneur (1) à concombres comportant un bac extérieur ouvert par le haut (3) pourvu d'au moins un compartiment (5), ledit compartiment étant délimité par un fond (9), un panneau avant (11), un panneau arrière (13) et deux panneaux latéraux (15, 17), **caractérisé en ce que** le conteneur comporte par ailleurs un bac intérieur ouvert vers le haut (19, 21), pourvu d'un fond (23), d'un panneau avant (25), d'un panneau arrière (27) et de deux panneaux latéraux (29, 31), ledit bac intérieur se trouvant dans le compartiment du bac extérieur et pouvant se déplacer entre la position la plus avancée, position dans laquelle le bac intérieur est contigu au panneau avant ou se trouve à proximité du panneau avant dudit compartiment, et la position la plus arrière, position dans laquelle le bac intérieur est contigu au panneau arrière ou se trouve à proximité du panneau arrière du compartiment.

2. Conteneur selon la revendication 1, **caractérisé en ce que** le conteneur comporte des dispositifs de blocage (41) capables d'immobiliser le bac intérieur dans l'une des positions.

3. Conteneur selon la revendication 1 ou 2, **caractérisé en ce que** le bac intérieur est pourvu de roues (33) et mobile par rapport au bac extérieur.

4. Conteneur selon la revendication 1, 2 ou 3, **caractérisé en ce que** les roues sont placées en haut des panneaux latéraux du bac intérieur, tandis que le haut des panneaux latéraux du bac extérieur comporte des glissières (37) sur lesquelles les roues peuvent se mouvoir.

5. Conteneur selon la revendication 3 ou 4, **caractérisé en ce que** le bas des panneaux latéraux du bac intérieur comporte des roues supplémentaires (35) et **en ce que** le bas des panneaux latéraux du bac extérieur comporte des glissières supplémentaires (39) sur lesquelles peuvent se mouvoir les roues supplémentaires.

6. Conteneur selon l'une des revendications précédentes, **caractérisé en ce que** le fond du bac intérieur comporte au moins une vanne (43) et **en ce que** le fond du bac extérieur comporte au moins deux vannes (45, 47), l'une des vannes du bac extérieur se trouvant, lorsque le bac intérieur est placé dans sa position la plus avancée, sous la vanne du bac intérieur et l'autre vanne du bac extérieur se trouvant sous la vanne du bac intérieur lorsque le bac intérieur est placé dans sa position la plus arrière.

7. Conteneur selon l'une des revendications précédentes, **caractérisé en ce que** le bac extérieur comporte un compartiment supplémentaire (7) et le conteneur un bac intérieur supplémentaire, chaque compartiment comportant un bac intérieur, et les compartiments étant contigus par les panneaux arrière.

8. Conteneur selon la revendication 6 ou les revendications 6 et 7, **caractérisé en ce que** chaque vanne peut pivoter autour d'un axe (49) parallèle aux côtés avant et arrière, toutes les vannes pouvant s'ouvrir vers le bas dans la même direction.

9. Système destiné à la collecte et au transport de concombres, comportant un dispositif de transport (53) doté d'un support (55) et d'un convoyeur (57) qui se trouve au moins partiellement sous le support, **caractérisé en ce que** le système comporte en outre au moins un conteneur selon la revendication 8, qui peut être amené vers une position de vidage sur le support, le dispositif de transport incluant par ailleurs des dispositifs de réglage (59) permettant de régler en hauteur au moins la partie (61) du convoyeur se trouvant sous le support, ainsi que des dispositifs de réglage de vannes (62) permettant d'ouvrir séparément chacune des vannes du conteneur, et des dispositifs de pilotage (63) qui commandent les dispositifs de réglage en hauteur et les dispositifs de réglage des vannes de telle manière que, lors de l'ouverture d'une vanne, au moins la partie du convoyeur se trouvant sous le conteneur soit remontée afin que l'extrémité de la vanne ne soit séparée du convoyeur que par un faible écart.
